# EUROPÄISCHE PATENTSCHRIFT

(11) **EP 0 640 509 B1**
(45) Veröffentlichungstag und Bekanntmachung des Hinweises auf die Patenterteilung: **07.04.1999**
(21) Anmeldenummer: 94113141.9
(22) Anmeldetag: 23.08.1994
(51) Int. Cl.: B60N 2/36

(54) **Rückhaltesystem für umklappbare Rücksitzlehnen in Kraftfahrzeugen**
Restraint system for tiltable backrests of rear seats in vehicles
Système de retenue pour dossiers rabattables de sièges arrière de véhicules

(30) Priorität: 26.08.1993 DE 4328788
(43) Veröffentlichungstag der Anmeldung: 01.03.1995
(73) Patentinhaber: Cyliax, Uwe, D-97842 Karbach (DE)
(72) Erfinder: Cyliax, Uwe, D-97842 Karbach (DE)
(74) Vertreter: Götz, Georg, Dipl.-Ing.

(56) Entgegenhaltungen:
- EP-A- 0 046 149
- EP-A- 0 258 823
- DE-A- 4 239 492
- FR-A- 2 401 799

## Beschreibung

Die Erfindung richtet sich auf ein Rückhaltesystem umklappbarer Rücksitzlehnen in Kraftfahrzeugen, insbesondere Personenkraftwagen.

Bei einer Frontalkollision eines Kraftfahrzeugs wird das nur lose eingeladene Gepäck mit einem Vielfachen seines eigenen Gewichts nach vorne katapultiert. Dieser Mechanismus ist Gegenstand zahlreicher Testprogramme von führenden Automobilherstellern wie auch des ADAC und des TÜV und beispielsweise in der 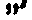 ADAC Motorwelt", Ausgabe Juli 1992, Seiten 38, 39, 42 und 44 ausführlich beschrieben. Insbesondere bei Personenkraftwagen mit heckseitigem Laderaum wird das Ladegut nach vorne gegen die Rücksitzlehne geschleudert. In einem solchen Fall erweisen sich insbesondere geteilte Rücksitzlehnen als sehr gefährlich, da sie durch ihre Trennung nicht sehr stabil sind und unter dem Druck des Ladeguts häufig nach vorn umknicken. Bei angegurteten Fondpassagieren bedeutet das, daß die hohe Trägheitskraft des Ladeguts, welche weit über eine Tonne betragen kann, auf die Fondpassagiere von hinten einwirkt und in den Sicherheitsgurt preßt oder gegen den Vordersitz drückt. Dadurch besteht die hohe Gefahr von gefährlichen inneren Verletzungen, insbesondere im oberen Körperbereich.

Bisher sind zur Vermeidung dieses Effektes nur Zurrgurte und Fangnetze bekannt, mit denen eine unkontrollierte Bewegung des Ladeguts verhindert wird. Allerdings sind besonders Fangnetze sehr elastisch und können wie Zurrgurte das Ladegut daher nicht hundertprozentig fixieren. Außerdem gestaltet sich das Be- und Entladen bei Verwendung von Zurrgurten und/oder Fangnetzen sehr umständlich und sehr aufwendig. Zwar offenbart die WO-91/00196 eine motorgetriebene Spann- und Aufwickelvorrichtung für Zurrgurte mit integrierter Regelung der Zurrspannung. Eine derartige Spann- und Aufwickelvorrichtung ist jedoch ein höchst aufwendiges und daher sowohl teures als auch störanfälliges Gebilde, so daß der Einbau in Personenkraftwagen aus wirtschaftlichen Gesichtspunkten kaum sinnvoll ist.

Aus der DE-OS 29 06 988 ist eine Einstellvorrichtung für Fahrzeugsicherheitsgurte mit einem Schultergurt bekannt geworden, bei der ein zusätzlicher Hilfsgurt vorgesehen ist, der sich vor der Rücksitzlehne in etwa vertikaler Richtung erstreckt und mit seinem unteren Ende im Bereich der Falz zwischen Rücksitzbank einerseits und Rücksitzlehne andererseits verankert ist, während sein oberes Ende bei Fahrzeugen mit Kofferraum am Ablagebrett befestigt ist, bei Fahrzeugen mit großer Heckklappe sich dagegen an der Rückseite des Sitzes nach unten zu einem Aufroller erstreckt, der an einer geeigneten Befestigung, z.B. an der Rücksitzlehne oder am Fahrzeugboden befestigt ist. Entlang dieses Hilfsgurtes ist ein Verbindungsteil verschieblich angeordnet, welches den Schultergurt führt und durch Verschieben entlang des Hilfsgurtes eine Anpassung des Schultergurtes an die Größe einer sitzenden Person ermöglicht. Da umklappbare Rücksitzlehnen nur bei Fahrzeugen mit großer Heckklappe zu finden sind, müßte der Hilfsgurt entsprechend der letzten, beschriebenen Ausführungsform hinter der Sitzlehne nach unten geführt und am Fahrzeugboden verankert werden. Bei einer derartigen Anordnung bietet der Gurt aber keinerlei Schutz vor einem unbeabsichtigten Vorklappen der Rücksitzlehne, sondern würde einfach mit nach vorne gebogen. Darüber hinaus ist der Hilfsgurt gemäß der Vorerfindung im Bereich der Fahrzeuglängsseiten angeordnet, wo selbst bei umklappbaren Rücksitzlehnen ohnehin eine zufriedenstellende Verankerung vorhanden ist.

Die DE-OS 29 24 144 offenbart eine Sicherheitsgurtanordnung für mit umklappbaren Lehnen versehene Fondsitze von Personenkraftfahrzeugen, bei der eine selbsttätige Gurtaufwickelvorrichtung, auf der das obere Ende des Schultergurtes aufgewickelt ist, in Schulterhöhe in der Fondsitzlehne unterhalb der Lehnenbespannung angeordnet ist, während das Gurtband durch eine in der Lehnenbespannung angeordnete Gurtöse nach außen geführt ist. Auch diese Anordnung ist nicht in der Lage, bei einem Frontalaufprall das durch lose Gepäckstücke bewirkte Vorklappen der Rücksitzlehnen zu verhindern. Denn bei dieser Anordnung fehlt eine Verbindung mit dem Fahrzeugchassis oder der Karosserie völlig. Die Gurtaufwickelvorrichtung ist in der Rücksitzlehne integriert und schwenkt mit dieser nach vorn, wobei ein Fondpassagier selbst in angeschnalltem Zustand gegen die Vordersitze des Wagens gedrückt wird.

Schließlich können auch die weiteren Druckschriften DE-AS 24 19 368; US-PS 3,365,231; DE-OS 25 16 113 und DE-OS 39 31 696 keine für die Praxis tauglichen Vorrichtungen zur Stabilisierung umklappbarer Rücksitzlehnen bei einem Frontalaufprall anbieten. Die genannten Druckschriften beziehen sich auf die Fixierung der Lehnen von Vordersitzen und schlagen vor, hierzu einen oder mehrere Gurte vom oberen Bereich der betreffenden Rückenlehne zu den rückwärtigen Türen; dem Fahrzeugboden; dem Dach im Bereich der B-Säule bzw. dem Dach im Bereich der C-Säule zu spannen. Diese Gurte verlaufen ausnahmslos etwa diagonal zur Fahrtrichtung und können daher nur geringe Kräfte auffangen. Damit können allenfalls Vordersitze stabilisiert werden, nicht dagegen Rücksitzlehnen, die bei einem Frontalaufprall auch herumfliegenden, schweren Gepäckstücken standhalten müssen.

Aus diesen Nachteilen vorbekannter Anordnungen resultiert das die Erfindung initiierende Problem, eine Vorrichtung zu schaffen, mit der die Rücksitzlehne gegen ein unerwünschtes Umklappen durch verrutschende Gegenstände gesichert werden kann.

Zur Lösung dieses Problems sieht die Erfindung ein Rückhaltesystem umklappbarer Rücksitzlehnen in Kraftfahrzeugen, insbesondere Personenkraftwagen, vor, das einen lösbaren, spannbaren, reißfesten Gurt aufweist, der vom oberen Bereich der Rücksitzlehne oberhalb des Laderaums und/oder der Laderaumabdeckung bis zum Fahrzeugheck verläuft und dort an der Innenseite der Heckklappe verankert ist. Durch den etwa in Längsrichtung des Fahrzeugs verlaufenden Gurt wird einer Frontalkollision genau entgegengewirkt, so daß die Rücksitzlehne durch in Fahrtrichtung geschleuderte Gegenstände nicht mehr nach vorn umgeknickt werden kann. Demzufolge können die Rücksitzlehnenhalterungen und Arretierungen sehr stark entlastet werden. Der Gurt verläuft von der Oberkante der Rücksitzlehnen auf möglichst kürzestem Weg zum Fahrzeugheck, um eine Gurtlose auszuschließen bzw. so gering wie möglich zu halten. Durch eine unmittelbare Gurtführung über der Ladeflächenabdeckung und/oder über dem Fangnetz wird deren Funktion stabilisiert und verbessert. Durch Befestigung des Gurts an der Heckklappe wird dieser beim Öffnen derselben mit nach oben gehalten, woraus eine uneingeschränkte Bewegungsfreiheit beim Be- und Entladen des Fahrzeugs resultiert.

Es hat sich als günstig erwiesen, daß der Gurt innerhalb der vertikalen Fahrzeuglängsmittelebene und/oder parallel zu dieser verläuft. Insbesondere bei ungeteilten und bei etwa 1/3 zu 2/3 asymmetrisch geteilten Rücksitzlehnen wird der gesamte Gurtverlauf über die Fahrzeuglängsachse vollzogen, während er sich bei 1/2 zu 1/2 symmetrisch geteilten Rücksitzlehnen neben der Fahrzeuglängsachse, entweder auf der rechten oder auf der linken Seite befindet, wobei die Gurtführung parallel zur Längsachse ist. Vorzugsweise wird ein Verlauf in der Fahrzeuglängsachse angestrebt, um die auftretenden Kräfte gleichmäßig abzuleiten.

Es liegt im Rahmen der Erfindung, daß bei geteilter Rücksitzlehne nur ein Gurt verwendet wird. Insbesondere bei 1/3 zu 2/3 geteilter Rücksitzbank sind die auf die breite Rücksitzlehne einwirkenden Kräfte im allgemeinen viel größer als die auf die andere Rücksitzlehne einwirkenden Kräfte. In vielen Fällen ist es daher möglich, das Rückhaltesystem auf die besonders beanspruchte Rücksitzlehne zu beschränken. Um dennoch ein vollwertiges Rückhaltesystem zu erhalten, welches beide Lehnenhälften sichert, kann die Erfindung dahingehend weitergebildet werden, daß der nicht durch den Gurt zurückgehaltene Teil der Rücksitzlehne an dem zurückgehaltenen Teil mittels einer Verriegelung festlegbar ist.

Eine sinnvolle Ausgestaltung der Erfindung besteht darin, daß der Gurt durch eine Aufrollautomatik gespannt ist. Hierdurch kann eine Gurtlose völlig ausgeschlossen werden.

Eine vorteilhafte Weiterbildung erfährt die Erfindung dadurch, daß die Aufrollautomatik unterhalb der Rücksitzlehne am Fahrzeugchassis befestigt ist. In diesem Bereich ergibt sich einerseits ein maximal kurzer Verlauf für das untere Gurtende, andererseits ist der Karosserieboden im allgemeinen in der Lage, hohe Zugkräfte aufzunehmen.

Es hat sich als günstig erwiesen, daß die Aufrollautomatik auf einem Verstärkungsteil, vorzugsweise in Form einer Traverse, angeordnet ist. Da der Karosserieboden im Bereich der Aufrollautomatik hohe Zugkräfte aufnehmen muß, kann es erforderlich werden, ein Verstärkungsblech und/oder eine zusätzlich Traverse im Karosserieboden einzuschweißen.

Gemäß einem weiteren Merkmal der Erfindung ist die Aufrollautomatik außerhalb des Fahrgastraums und/oder außerhalb des Laderaums angeordnet.

Auf diese Art läßt sich die Aufrollautomatik so anbringen, daß eine Beschädigung durch Fremdeinwirkung ausgeschlossen werden kann.

Weiterhin liegt es im Rahmen der Erfindung, daß die Aufrollautomatik abgekapselt ist. In Fahrzeugen, die als Laderaumboden einen Zwischenboden besitzen, besteht die Möglichkeit, daß die Aufrollautomatik innerhalb dieses Hohlraums zwischen Karosserieboden und Laderaumboden verschmutzungsfrei verschraubt werden kann. Bei einer Montage unterhalb des Karosseriebodens ist dagegen eine Abkapselung notwendig, um eine Verschmutzung auszuschließen.

Eine günstige Weiterbildung wird der Erfindung dadurch zuteil, daß der Gurt innerhalb der Rücksitzlehne von deren oberen Bereich nach unten geführt ist. Auf diese Art wird der Gurt einerseits auf kürzestem Weg von dem oberen Bereich der Rücksitzlehne zur Aufrollautomatik geführt und ist andererseits innerhalb der Rücksitzlehne vor Beschädigungen weitgehend geschützt.

Der Gurt kann innerhalb der Rücksitzlehne durch einen U-förmig profilierten, etwa vertikal verlaufenden Bügel geführt sein. Indem der Gurt innerhalb der Rücksitzlehne in einen derartigen Bügel eingelegt ist, kann er frei gleiten, ohne eingeklemmt oder zusammengedrückt zu werden. Dies ermöglicht es der Gurtaufrollvorrichtung, den Gurt ständig zu straffen, um eine Gurtlose zu vermeiden. Weiterhin hat ein U-förmiges, also an einer Längsseite offenes Profil neben dem Vorteil einer leichteren Montage des Gurtes auch ein relativ geringes Gewicht bei hoher Stabilität. Als Werkstoff können Stahl oder Aluminium-Strangpreßprofile gewählt werden. Letzteres bietet einen zusätzlichen Gewichtsvorteil. Durch die Positionierung innerhalb der Rücksitzlehne kann eine glattflächige Rückseite der Rücksitzlehne beibehalten werden, so daß zwischen Ladegut und Rücksitzlehne kein Spalt verbleibt, was insbesondere bei größeren Gegenständen wichtig ist.

Indem die offene Längsseite des U-förmig profilierten Bügels nach vorn weist, ist der Gurt sowohl beim Be- und Entladen als auch im Kollisionsfall vor einem Auftreffen des Ladegutes geschützt und bleibt voll funktionsfähig.

Vorzugsweise ist der Bügel innerhalb der Rücksitzlehne vor dem Grundrahmen montiert. Hierdurch kann die bei einer Frontalkollision auftretende, hohe Gegenkraft formschlüssig auf den davor befindlichen Bügel und von diesem auf den Gurt übertragen werden.

Eine Gitterstruktur des Grundrahmens der Rücksitzlehne ergibt eine möglichst großflächige Verteilung der Rückhaltekraft von dem Gurt über den Bügel auf die gesamte Rücksitzlehne.

Es hat sich als günstig erwiesen, daß an den Ein- und Austrittspunkten des Gurts in der Rücksitzlehne je eine von dem Gurt durchsetzte Führungsöse angeordnet ist. Diese Ösen dienen dazu, ein Verrutschen oder Verklemmen des Gurtes zu verhindern.

Auf der Rücksitzlehnenoberkante, direkt am Gurtaustritt, kann zusätzlich ein Formteil aus Kunststoff aufgesteckt sein, um einerseits ein ggf. vorhandenes Gurtschloßgegenstück an einem Zurückgleiten in die Rücksitzlehne zu verhindern und andererseits eine sichere und saubere Abdeckung der Rücksitzlehnenöffnung zu erzielen.

Eine günstige Ausbildung der Erfindung besteht darin, daß der Gurt an einer in der Heckklappe integrierten Traverse verankert ist. Diese Traverse wird bei ihrer Funktion auf Zug und Druck beansprucht und soll den Hauptanteil der Stoßenergie aufnehmen und auf die Seitenstruktur des Heckbereichs - außerhalb der Fahrgastzelle - weiterleiten.

Die Traverse erstreckt sich vorzugsweise über die gesamte Breite der Heckklappe. Eine Integration der Traverse in die Heckklappe hat einerseits den Vorteil, daß eine ebenflächige Heckklappeninnenverkleidung erhalten bleibt und somit kein Laderaum verloren geht. Andererseits wird bei einer Frontalkollision über die Traverse die gesamte Heckklappenstruktur belastet und dadurch die Stoßenergie auch auf den Heckklappenrahmen übertragen.

Ein weiteres vorteilhaftes Merkmal der Erfindung liegt darin, daß der karosserieseitige Heckklappenrahmen im Bereich der Traversenendpunkte durch etwa in Längsrichtung der Karosserie verlaufende Verstärkungselemente abgestützt ist. Hierdurch ergibt sich bei einer Frontalkollision eine definierte Ableitung der von dem Gurt auf die in der Heckklappe angeordnete Traverse eingeleiteten Kraft auf das Fahrzeugchassis.

Die Anordnung der Verstärkungselemente läßt sich weiterhin dadurch optimieren, daß diese Verstärkungselemente mit dem Heckklappenrahmen einerseits, einer Fahrzeugseitenwand und/oder einem hinteren Radkasten andererseits verbunden sind. Eine solche Konstruktion verleiht den erfindungsgemäßen Verstärkungselementen eine sehr hohe, mechanische Stabilität, welche nicht nur bei der Ableitung der Gurtkraft nützlich ist, sondern auch bei einem Heckaufprall, bei dem die erfindungsgemäße Traverse in Verbindung mit den erfindungsgemäßen Verstärkungselementen als zusätzlicher Heckaufprallschutz dient.

Weitere Vorteile lassen sich dadurch erreichen, daß das heckseitige Teil der Verstärkungselemente als Fangelement ausgebildet ist. Durch das Fangelement verhindern die Verstärkungselemente bei einem Aufprall ein Abgleiten der Traverse und schaffen dadurch ein Höchstmaß an Sicherheit. Das Fangelement kann bspw. die Form eines Einzugs oder eines Knicks aufweisen.

Indem das heckseitige Gurtende lösbar mit der Heckklappe verbunden ist, können bei einer erwünschten Vergrößerung des Laderaums die Rücksitzlehnen nach vorne umgeklappt werden, ohne daß dabei der Gurt hinderlich ist.

Es liegt im Rahmen der Erfindung, daß ein Gurtschloß vorhanden ist, das um eine horizontale, quer zur Fahrtrichtung verlaufende Achse verschwenkbar ist. Dieser Freiheitsgrad der Bewegung ist deshalb notwendig, weil bei geschlossener Heckklappe das Gurtschloß in etwa waagerecht nach vorn zeigt, bei geöffneter Heckklappe dagegen schräg nach vorn unten verläuft. Infolge der erfindungsgemäßen Beweglichkeit wird der Sicherheitsgurt immer gespannt und Verletzungen des Gurtbandes durch Einknicken oder Verklemmen werden verhindert.

Zur Erzielung weiterer Vorteile sieht die Erfindung vor, daß in dem bei nach oben verschwenkter Heckklappe entstehenden Berührungsbereich des Gurtes mit dem Fahrzeughimmel und/oder der Heckklappenrahmenoberkante ein abriebfester Schleifschutz aus Kunststoff montiert ist. Bei geöffneter Heckklappe kann sich ein Berührungspunkt des Gurts mit dem Fahrzeughimmel und/oder dem Kantenschutz der Heckklappenrahmenoberkante ergeben. Der Schleifschutz vermeidet dabei Beschädigungen; er kann leicht auswechselbar aufgesetzt oder in die Kunststoffabdeckung ebenflächig integriert sein.

Weitere Merkmale, Einzelheiten und Vorteile auf der Basis der Erfindung ergeben sich aus der nachfolgenden Beschreibung einiger Ausführungsbeispiele der Erfindung so wie anhand der Zeichnung. Hierbei zeigen:
- Fig. 1: einen Längsschnitt durch den Heckbereich eines Kombifahrzeugs in schematisierter Darstellung,
- Fig. 2: das Detail II aus Fig. 1 in einem vergrößerten Maßstab,
- Fig. 3: das Detail III aus Fig. 1 in einem vergrößerten Maßstab,
- Fig. 4: eine andere Ausführungsform der Erfindung in einer der Fig. 3 entsprechenden Darstellung,
- Fig. 5: das Detail V aus Fig. 1 bei geöffneter Heckklappe, sowie
- Fig. 6: die Innenseite eines rückwärtigen Kotflügels bei leicht geöffneter Heckklappe sowie in detaillierterer Darstellung.

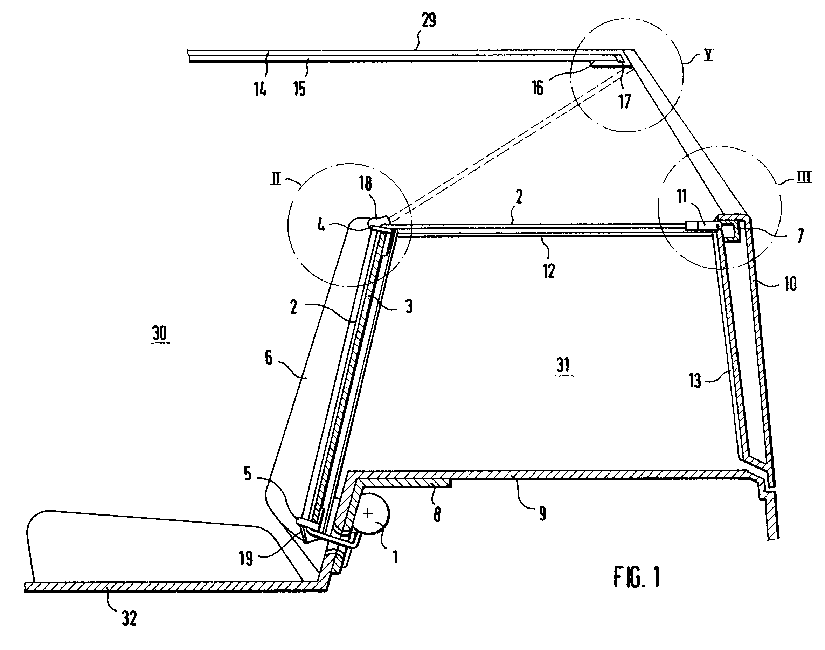

In Fig. 1 ist der Aufbau des Heckteiles eines Kombifahrzeugs 29 mit seinen wichtigsten Baugruppen dargestellt, um die erfindungsgemäße Gurtführung zu veranschaulichen. Von einer Aufrollautomatik 1, die außerhalb des Fahrgastraums 30 und außerhalb des Laderaums 31 auf einer zusätzlichen, unterhalb des Karosseriebodens 32 angeordneten Traverse 8 montiert ist, wird der Gurt 2 durch eine Öffnung im Karosserieboden 32 in den Fahrgastraum 30 geleitet. Der Gurt 2 wird in die Rücksitzlehne 6 durch eine untere Abdeckung 19 und eine untere Öse 5 eingeführt; von dort verläuft er innerhalb des U-Profils eines Bügels 3 und tritt durch eine obere Öse 4 und eine obere Abdeckung 18 aus der Rücksitzlehne 6 im Bereich von deren Oberkante aus. Der Gurt 2 erstreckt sich nun auf dem kürzesten Weg oberhalb der Laderaumabdeckung 12 zum Gurtschloß 11, welches über eine Traverse 7 mit der Heckklappe 10 verbunden ist. Durch den kurzen Verlauf wird einer Gurtlose vorgebeugt.

Der Bügel 3 ist sehr stabil ausgeführt, weil er die größte Gegenkraft im Fall einer Frontalkollision aufbringen muß. Er ist daher so zu dimensionieren, daß er den hohen Belastungen einer Kollision standhält.

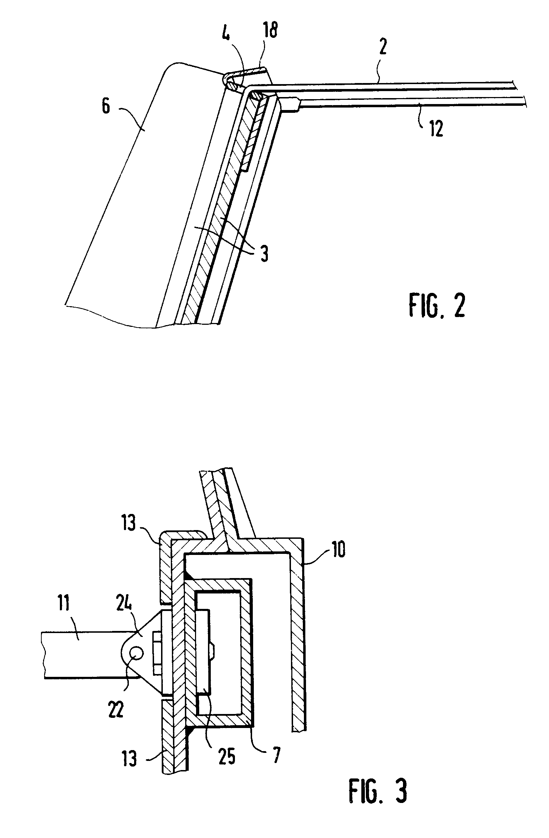

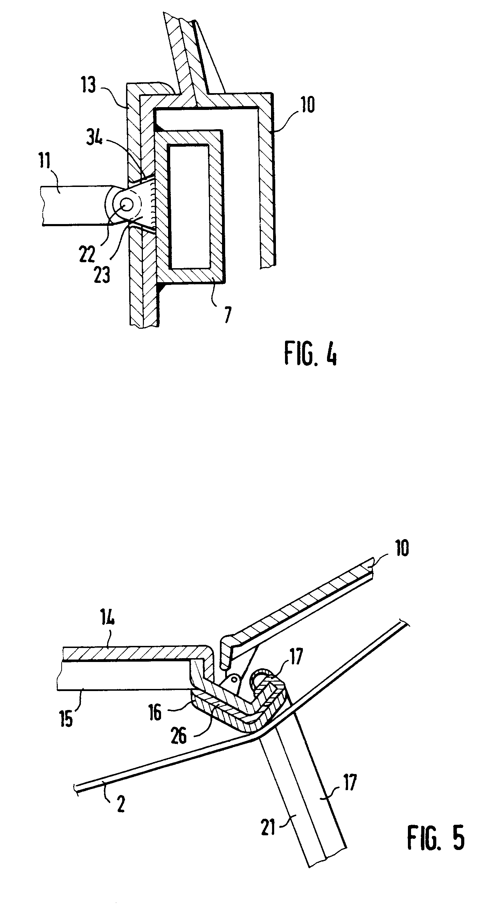

Die Figuren 3 und 4 zeigen zwei verschiedene Varianten zur Befestigung des Gurtschlosses 11 an der Traverse 7 in der Heckklappe 10. Zu erkennen ist, daß die Traverse 7 derart in die Heckklappe 10 eingeschweißt ist, daß sie in horizontaler Ebene über die gesamte Breite der Hecklappe 10 verläuft. Eine Integration der Traverse 7 in die Hecklappe 10 hat den Vorteil, daß eine ebenflächige Heckklappeninnenverkleidung 13 erhalten bleibt und somit kein Laderaum verloren geht. Der zweite und eigentlich wichtigere Vorteil ist, daß bei einer Frontalkollision die Traverse 7 und die gesamte Heckklappenstruktur 10 belastet wird. Somit wird die Stoßenergie auch auf den Hecklappenrahmen 21 übertragen.

In Fig. 3 ist eine Halterung 24 für das Gurtschloß 11 auf einer sich in der Traverse 7 befindenden Gewindeplatte 25 aufgeschraubt. Das Gurtschloß 11 ist über eine horizontale, quer zur Fahrtrichtung verlaufende Drehachse 22 verschwenkbar an der Halterung 24 angelenkt. Durch die anschraubbare Gewindeplatte 25 hat diese Ausführungsform den Vorteil einer einfachen Endmontage.

In Fig. 4 ist eine zweite Variante dargestellt. Zwei Zugösen 23 sind durch eine Öffnung 34 in der Heckklappe 10 auf der Traverse 7 aufgeschweißt und ergeben zusammen mit der entsprechend ausgeschnittenen Heckklappeninnenverkleidung 13 eine fast ebene Oberfläche. Diese Ausführungsform bietet mehrere Vorteile. Einerseits wird durch die fast ebenflächige Ausführung eine Beschädigung von Ladegut ausgeschlossen. Andererseits ergibt sich aufgrund weniger Bauteile ein geringeres Gewicht.

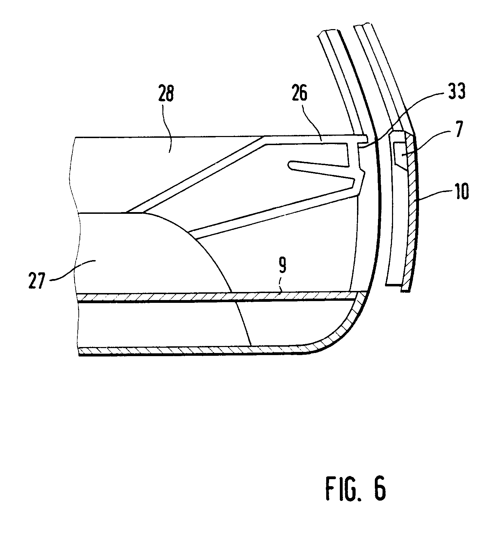

In Fig. 6 ist der Heckbereich eines Fahrzeuges schematisch dargestellt, mit dem Verstärkungsprofil 26, dem hinteren Radkasten 27, der Seitenwand 28, dem Heckklappenrahmen 21 und dem Laderaumboden 9 im Schnitt. Zu erkennen ist, daß die Verstärkungsprofile 26 am Heckbereich einen Einzug 33 bzw. einen Knick aufweisen. Der Grund für diese erfinderische Ausbildung ist deren Funktion als Fangelemente, um ein Abgleiten der aufliegenden Traverse 7 im Kollisionsfall zu verhindern und die Stoßenergie definiert über die Verstärkungsprofile 26 auf die Seitenwände 28 und die Radkästen 27 zu übertragen.

Kommt es nun doch einmal zu einer Frontalkollision, so wird zuerst ein Gurtstopper in der Aufrollautomatik 1 aktiviert und sichert ein Straffhalten des Gurtes 2. Ladegut wird gegen die Rücksitzlehne 6 geschleudert, welche durch den Gurt 2 in ihrer Position gehalten wird. Der Kraftfluß bewegt sich nun zwei Richtungen. Ein Teil der Stoßenergie wird über die Rücksitzlehne 6, den Gurt 2 und die Aufrollautomatik 1 auf das Verstärkungsblech oder die eingeschweißte Traverse 8 auf den Karosserieboden 32 übertragen. Der größere Teil der Stoßenergie wird in Richtung Fahrzeugheck über die Rücksitzlehne 6, den Bügel 3, den Gurt 2 und das Gurtschloß 11 auf die Traverse 7 in der Heckklappe 10 übertragen und von dort auf den Heckklappenrahmen 21 sowie auf die Verstärkungselemente 26, die mit dem Hecklappenrahmen 21, den hinteren Radkästen 27 und den hinteren Seitenwänden 28 verschweißt sind, abgeleitet. Somit ist klar zu erkennen, daß die Energieaufnahme des nach vorne geschleuderten Ladeguts außerhalb des Fahrgastraumes 30 erfolgt.

Von Vorteil ist die funktionsbedingte Neigung der Rücksitzlehne 6 nach hinten. Somit ergibt sich ein Fangkeil für das Ladegut und Gepäck, zumindest mit einem Schwerpunkt unterhalb der Rückenlehnenoberkante 18.

Problemlos ist der erfindungsgemäße Einsatz für ungeteilte Rücksitzlehnen 6. Für geteilte Rücksitzlehnen 6 ist eine Verriegelung vorgesehen, um die 1/3 geteilte Rücksitzlehne 6 an der gesicherten, 2/3 geteilten Rücksitzlehne festzubinden. Gleiches gilt für 1/2 zu 1/2 geteilte Rücksitzlehnen 6.

Durch den Einsatz der Traverse 7 in der Heckklappe 10 und dem Aufliegen auf den Verstärkungsprofilen 26 ergibt sich eine wesentliche Verbesserung der Sicherheit bei einem Heckaufprall, insbesondere bei einer punktförmigen Berührung der Heckklappe im Unfallgeschehen. Ein zusätzlicher Vorteil ist die Versteifung der Karosseriestruktur gegenüber Kollisionen von schräg hinten.

In Fig. 1 ist vermittels gestrichelter Linie der Verlauf des Gurtes 2 bei geöffneter Heckklappe 10 dargestellt. Deutlich erkennbar ist nun die räumliche Größe, die für behinderungsfreies Hantieren notwendig ist. Die uneingeschränkte Bewegungsfreiheit beim Be- und Entladen des Fahrzeuges 29 ergibt sich vor allem durch den nach oben gezogenen Gurt 2 und bildet aufgrund der hohen Bedienungsfreundlichkeit einen großen Vorteil des erfindungsgemäßen Rückhaltesystems. Selbst bei großem Ladegut wird beim Beladevorgang der Gurt 2 von der Aufrollautomatik 1 abgerollt, so daß keine zusätzliche manuelle Tätigkeit erforderlich ist. Andererseits wird beim Entladen während des Herausnehmens des Ladeguts der Gurt 2 durch die Aufrollautomatik 1 selbsttägig wieder gestrafft. Auch beim Schließen der Heckklappe 10 wird der Gurt automatisch gestrafft, so daß sämtliche Ladevorgänge wie gewohnt ablaufen können.

In Fig. 5 ist schematisch der obere Heckbereich eines Kombi- oder Schrägheckfahrzeugs 29 mit Dachhaut 14, Himmelbezug 15, Heckklappe 10, Hecklappenrahmen 21, Kantenschutz mit Gummidichtung 17 und dem Gurt 2 dargestellt. Deutlich zu erkennen ist hier, daß der Gurt 2 an einem Schleifschutz 16 anliegt. Beim Öffnen der Heckklappe 10 vergrößert sich mit dem Öffnungswinkel auch der Abstand zwischen Gurtaustritt an der Rücksitzlehnenoberkante 18 und dem Gurtschloß 11 an der Hecklappe 10. Durch diese Bewegung wird der Sicherheitsgurt 2 von der Aufrollautomatik 1 abgerollt und gleitet zwangsläufig an der Oberkante des Heckklappenrahmens 21 entlang. Um eine Beschädigung des Gurtes 2 und der betreffenden Bauteile wie Himmelbezug 15, Kantenschutz 17 und Kunststoffabdeckung 26 auszuschließen, soll der Schleifschutz 16 leicht auswechselbar aufgesetzt oder in die Kunststoffabdeckung 26 ebenflächig integriert werden.

## Patentansprüche

1. Rückhaltesystem umklappbarer Rücksitzlehnen in Kraftfahrzeugen, insbesondere Personenkraftwagen, mit einem lösbaren, spannbaren, reißfesten Gurt (2), der vom oberen Bereich (18) der Rücksitzlehne (6) oberhalb des Laderaums und/oder der Laderaumabdeckung bis zum Fahrzeugheck verläuft und dort an der Innenseite der Heckklappe (10) verankert ist.

2. Rückhaltesystem nach Anspruch 1, dadurch gekennzeichnet daß der Gurt (2) innerhalb der vertikalen Fahrzeuglängsmittelebene und/oder parallel zu dieser verläuft.

3. Rückhaltesystem nach Anspruch 1 oder 2, dadurch gekennzeichnet, daß bei geteilter Rücksitzlehne (6) nur ein Gurt (2) verwendet wird.

4. Rückhaltesystem nach Anspruch 3, dadurch gekennzeichnet, daß der nicht durch den Gurt (2) zurückgehaltene Teil der Rücksitzlehne (6) an dem zurückgehaltenen Teil vermittels einer Verriegelung festlegbar ist.

5. Rückhaltesystem nach einem der vorhergehenden Ansprüche, dadurch gekennzeichnet, daß der Gurt (2) durch eine Aufrollautomatik (1) gespannt ist.

6. Rückhaltesystem nach Anspruch 5, dadurch gekennzeichnet, daß die Aufrollautomatik (1) unterhalb der Rücksitzlehne (6) am Fahrzeugchassis befestigt ist.

7. Rückhaltesystem nach Anspruch 6, dadurch gekennzeichnet, daß die Aufrollautomatik (1) auf einem Verstärkungsteil, vorzugsweise in Form einer Traverse (8), angeordnet ist.

8. Rückhaltesystem nach Anspruch 6 oder 7, dadurch gekennzeichnet, daß die Aufrollautomatik (1) außerhalb des Fahrgastraums und/oder außerhalb des Laderaums angeordnet ist.

9. Rückhaltesystem nach einem der Ansprüche 5 bis 8, dadurch gekennzeichnet, daß die Aufrollautomatik (1) abgekapselt ist.

10. Rückhaltesystem nach einem der vorhergehenden Ansprüche, dadurch gekennzeichnet, daß der Gurt (2) innerhalb der Rücksitzlehne (6) von deren oberen Bereich (18) nach unten geführt ist.

11. Rückhaltesystem nach einem der vorhergehenden Ansprüche, dadurch gekennzeichnet, daß der Gurt (2) an einer in der Heckklappe (10) integrierten Traverse (7) verankert ist.

12. Rückhaltesystem nach Anspruch 11, dadurch gekennzeichnet, daß die Traverse (7) sich über die gesamte Breite der Heckklappe (10) erstreckt.

13. Rückhaltesystem nach Anspruch 12, dadurch gekennzeichnet, daß der karosserieseitige Heckklappenrahmen (21) im Bereich der Traversenendpunkte durch etwa in Längsrichtung der Karosserie verlaufende Verstärkungselemente (26) abgestützt ist.

14. Rückhaltesystem nach Anspruch 13, dadurch gekennzeichnet, daß die Verstärkungselemente (26) mit dem Heckklappenrahmen (21) einerseits, einer Fahrzeugseitenwand (28) und/oder einem hinteren Radkasten (27) andererseits verbunden sind.

15. Rückhaltesystem nach Anspruch 13 oder 14, dadurch gekennzeichnet, daß das heckseitige Teil der Abstützungsprofile (26) als Fangelement ausgebildet ist.

16. Rückhaltesystem nach einem der vorhergehenden Ansprüche, dadurch gekennzeichnet, daß das heckseitige Gurtende lösbar mit der Heckklappe (10) verbunden ist.

17. Rückhaltesystem nach Anspruch 16, dadurch gekennzeichnet, daß an einer in die Heckklappe (10) integrierten Traverse (7), ein Gurtschloß (11) befestigt ist, in das eine am heckseitigen Gurtende angeordnete Gurtschloßzunge einrastbar ist.

18. Rückhaltesystem nach Anspruch 17, dadurch gekennzeichnet, daß das Gurtschloß (11) um eine horizontale, quer zur Fahrtrichtung verlaufende Achse (22) verschwenkbar ist.

19. Rückhaltesystem nach einem der vorhergehenden Ansprüche, dadurch gekennzeichnet, daß in dem bei nach oben verschwenkter Heckklappe (10) entstehenden Berührungsbereich des Gurtes (2) mit dem Fahrzeughimmel (15) und/oder der Heckklappenrahmenoberkante ein abriebfester Schleifschutz (16) aus Kunststoff montiert ist.

20. Rückhaltesystem nach einem der vorhergehenden Ansprüche, dadurch gekennzeichnet, daß das Gurtband (2) dem eines herkömmlichen Sicherheitsgurtes entspricht.

## Claims

1. Restraint system for tiltable backrests in motor vehicles, in particular passenger vehicles, comprising a detachable, tear-resistant belt (2), which can be tensioned and extends from the upper region (18) of the backrest (6) above the loading space and/or the loading space cover to the vehicle rear and is anchored there on the inner face of the tailgate (10).

2. Restraint system according to claim 1, characterised in that the belt (2) extends inside the vertical vehicle longitudinal centre plane and/or parallel thereto.

3. Restraint system according to claim 1 or 2, characterised in that if the backrest (6) is divided only one belt (2) is used.

4. Restraint system according to claim 3, characterised in that the part of the backrest (6) not restrained by the belt (2) is fixable to the restrained part by means of a bolt.

5. Restraint system according to one of the preceding claims, characterised in that the belt (2) is tensioned by an automatic rolling-up device (1).

6. Restraint system according to claim 5, characterised in that the automatic rolling-up device (1) is fixed below the backrest (6) to the vehicle chassis.

7. Restraint system according to claim 6, characterised in that the automatic rolling-up device (1) is disposed on a reinforcing part, preferably in the form of a cross-member (8).

8. Restraint system according to claim 6 or 7, characterised in that the automatic rolling-up device (1) is disposed outside the passenger space and/or outside the loading space.

9. Restraint system according to one of claims 5 to 8, characterised in that the automatic rolling-up device (1) is encapsulated.

10. Restraint system according to one of the preceding claims, characterised in that the belt (2) is passed inside the backrest (6) from its upper region (18) downward.

11. Restraint system according to one of the preceding claims, characterised in that the belt (2) is anchored on a cross-member (7) incorporated in the tailgate (10).

12. Restraint system according to claim 11, characterised in that the cross-member (7) extends over the entire width of the tailgate (10).

13. Restraint system according to claim 12, characterised in that the part of the tailgate frame (21) associated with the body is supported in the region of the cross-member end point by reinforcing elements (26) extending roughly in the longitudinal direction of the body.

14. Restraint system according to claim 13, characterised in that the reinforcing elements (26) are connected to the tailgate frame (21) on the one side and to a vehicle side wall (28) and/or a rear wheel case (27) on the other side.

15. Restraint system according to claim 13 or 14, characterised in that the part of the support profile (26) associated with the rear is formed as a catch element.

16. Restraint system according to one of the preceding claims, characterised in that the belt end associated with the rear is connected detachably to the tailgate (10).

17. Restraint system according to claim 16, characterised in that on a cross-member (7) integral with the tailgate (10) a belt lock (11) is fixed, into which a belt lock tongue disposed on the belt end associated with the vehicle rear is locatable.

18. Restraint system according to claim 17, characterised in that the belt lock (11) is pivotable about a horizontal axis (22) extending transverse to the direction of travel.

19. Restraint system according to one of the preceding claims, characterised in that in the contact region of the belt (2) with the vehicle ceiling (15) and/or the tailgate frame upper edge arising when the tailgate is pivoted up an abrasion-resistant plastics wear protection (16) is mounted.

20. Restraint system according to one of the preceding claims, characterised in that the belt hand (2) is the same as that of a conventional safety belt.

## Revendications

1. Système de retenue de dossiers de siège arrière rabattables dans des véhicules automobiles, notamment des voitures particulières, comportant une sangle détachable (2) pouvant être tendue et résistant à la déchirure, sangle qui, depuis la partie supérieure (18) du dossier de siège arrière (6), s'étend au-dessus de l'espace de chargement et/ou de l'élément de recouvrement de l'espace de chargement, jusqu'à l'arrière, et y est ancrée sur, la face intérieure du hayon arrière (10).

2. Système de retenue selon la revendication 1 caractérisé en ce que la sangle (2) s'étend dans le plan médian longitudinal vertical du véhicule et/ou parallèlement à celui-ci.

3. Système de retenue selon la revendication 1 ou 2, caractérisé en ce que, dans le cas où le dossier de siège arrière (6) est divisé, une seule sangle (2) est utilisée.

4. Système de retenue selon la revendication 3, caractérisé en ce que la partie du dossier de siège arrière (6) qui n'est pas retenue par la sangle (2) peut être fixée à la partie retenue au moyen d'un dispositif de verrouillage.

5. Système de retenue selon l'une des revendications précédentes, caractérisé en ce que la sangle (2) est tendue par l'intermédiaire d'un enrouleur automatique (1).

6. Système de retenue selon la revendication 5, caractérisé en ce que l'enrouleur automatique (1) est fixé au châssis du véhicule, au-dessous du dossier de siège arrière (6).

7. Système de retenue selon la revendication 6, caractérisé en ce que l'enrouleur automatique (1) est disposé sur une pièce de renforcement, de préférence sous forme d'une traverse (8).

8. Système de retenue selon la revendication 6 ou 7, caractérisé en ce que l'enrouleur automatique (1) est disposé à l'extérieur du compartiment pour passagers et/ou à l'extérieur de l'espace de chargement.

9. Système de retenue selon l'une des revendications 5 à 8, caractérisé en ce que l'enrouleur automatique (1) est sous boîtier.

10. Système de retenue selon l'une des revendications précédentes, caractérisé en ce que la sangle (2) est dirigée vers le bas à l'intérieur du dossier de siège arrière (6), depuis la partie supérieure (18) de ce dernier.

11. Système de retenue selon l'une des revendications précédentes, caractérisé en ce que la sangle (2) est ancrée sur une traverse (7) intégrée dans le bayon arrière (10).

12. Système de retenue selon la revendication 11, caractérisé en ce que la traverse (7) s'étend sur la largeur entière du hayon arrière (10).

13. Système de retenue selon la revendication 12, caractérisé en ce que l'encadrement (21), solidaire de la carrosserie, du hayon arrière est soutenu, dans la région des points d'extrémité de la traverse, par des éléments de renforcement (26) qui s'étendent à peu près dans la direction longitudinale de la carrosserie.

14. Système de retenue selon la revendication 13, caractérisé en ce que les éléments de renforcement (26) sont reliés, d'une part, à l'encadrement (21) du hayon arrière et, d'autre part, à une paroi latérale (28) du véhicule et/ou à un passage de roue arrière (27).

15. Système de retenue selon la revendication 13 ou 14, caractérisé en ce que la partie arrière des profilés de soutien (26) est conçue sous forme d'un élément d'arrêt.

16. Système de retenue selon l'une des revendications précédentes, caractérisé en ce que l'extrémité arrière de la sangle est reliée de façon détachable au hayon arrière (10).

17. Système de retenue selon la revendication 16, caractérisé en ce qu'une attache de sangle (11), dans laquelle peut être encliquetée une languette d'attache de sangle disposée à l'extrémité arrière de la sangle, est fixée à une traverse (7) intégrée dans le hayon arrière (10).

18. Système de retenue selon la revendication 17, caractérisé en ce que l'attache de sangle (11) peut pivoter autour d'un axe horizontal (22) qui s'étend transversalement à la direction de marche.

19. Système de retenue selon l'me des revendications précédentes, caractérisé en ce qu'une protection contre l'usure (16) en matière plastique, résistant à l'abrasion, est mise en place dans la région de contact de la sangle (2) avec le pavillon (15) du véhicule et/ou avec le bord supérieur de l'encadrement du hayon arrière, qui est formée lorsque le hayon arrière (10) est relevé par pivotement.

20. Système de retenue selon l'une des revendications précédentes, caractérisé en ce que la bande de sangle (2) correspond à celle d'une ceinture de sécurité classique.
